# EUROPÄISCHE PATENTSCHRIFT

(11) **EP 2 282 218 B1**
(45) Veröffentlichungstag und Bekanntmachung des Hinweises auf die Patenterteilung: **28.03.2012**
(21) Anmeldenummer: 09010113.0
(22) Anmeldetag: 05.08.2009
(51) Int. Cl.: G01Q 70/06, G01Q 70/10, B82Y 35/00

(54) **Microsonde mit Federbalkenarray**
Microprobe having a cantilevers array
Microsonde dotée d'un réseau de poutres en porte-à-faux

(43) Veröffentlichungstag der Anmeldung: 09.02.2011
(73) Patentinhaber: NanoWorld AG, 2007 Neuchâtel (CH)
(72) Erfinder: Sulzbach, Thomas, 91085 Weisendorf (DE); Engl, Wolfgang, 91054 Erlangen (DE)
(74) Vertreter: Klocke, Peter

(56) Entgegenhaltungen:
- WO-A-02/080187
- DE-A1-102007 045 860
- DE-C1- 10 057 656
- US-A1- 2002 166 962
- US-A1- 2006 255 818
- US-B1- 6 469 293
- XUEFENG WANG ET AL: "Multifunctional probe array for nano patterning and imaging" NANO LETTERS, ACS, WASHINGTON, DC, US, Bd. 5, Nr. 10, 24. September 2005 (2005-09-24), Seiten 1867-1872, XP002410120 ISSN: 1530-6984
- NAOKI WATANABE ET AL: "Thermal actuated multi-probes cantilever array for scanning probe parallel nano writing system" MICRO ELECTRO MECHANICAL SYSTEMS, 2007. MEMS. IEEE 20TH INTERNATIONAL CONFERENCE ON, IEEE, PI, 1. Januar 2007 (2007-01-01), Seiten 99-102, XP031203778 ISBN: 978-1-4244-0950-1

## Beschreibung

Die Erfindung betrifft eine Mikrosonde, mit einem Halteelement und einer Anzahl von Federbalken, die nebeneinander mit Abstand angeordnet seitlich von einem Rand des Halteelements abstehen, wobei die Federbalken eine identische Länge aufweisen und jeder der Federbalken zumindest gegenüber den beiden direkt benachbarten Federbalken eine unterschiedliche Querschnittsform zumindest über einen Teil der Länge aufweist. Unter Mikrosonden werden in diesem Zusammenhang Sonden zum Einsatz in der Nanotechnologie verstanden, wie sie heute bereits für eine Vielzahl von biologischen, chemischen oder physikalischen Anwendungen eingesetzt werden. Sie setzen eine biologische Aktivität, eine chemische Affinität oder eine physikalische Eigenschaft in eine mechanische Reaktion um.

Mikromechanische Federbalken werden seit vielen Jahren als empfindliche Sensoren für Beschleunigung (Air-Bag) und Kräfte (Rasterkraftmikroskopie) eingesetzt. Darüber hinaus wurde in zahlreichen wissenschaftlichen Untersuchungen belegt, dass mikromechanische Federbalken sich auch zur Detektion kleinster Massen eignen. Durch Funktionsbeschichtungen chemischer Art mit selektivem Bindungspotential können gezielt Spuren bestimmter Stoffe nachgewiesen werden (chemische Nase). Derartige Beschichtungen binden mehr oder weniger selektiv bestimmte Moleküle an dem Federbalken. Durch Untersuchung von Masse-Änderungen bei veränderter Temperatur können materialspezifische Untersuchungen an kleinsten Partikeln durchgeführt werden (Nano-Kalorimetrie). Durch Wirkbeschichtungen biologischer Art, beispielsweise mit einem Nährmedium, können bestimmte Mikroorganismen nachgewiesen werden. Solche Beschichtungen fördern den natürlichen Vermehrungsprozess der Mikroorganismen sowie den damit einhergehenden Stoffwechsel.

Viele dieser neuen Anwendungen von mikromechanischen Federbalken sind nur sehr eingeschränkt mit einzelnen Federbalken möglich, da Kontaminationen oder Veränderungen der Umgebungsbedingungen zu uneindeutigen Ergebnissen führen können. Deshalb hat sich die Nutzung von Federbalken-Arrays durchgesetzt, bei denen sich Kontaminations-Effekte an einzelnen Federbalken identifizieren und eliminieren lassen. Außerdem ist es durch komplementäre Funktionalisierung der Balken möglich, auch bei komplexeren Zusammensetzungen der zu untersuchenden Stoffe eindeutige Ergebnisse zu erhalten.

Auch bei der Rastersondenmikroskopie werden Mikrosonden, sogenannte SPM-Sonden in Verbindung mit einem Rastersondenmikroskop zur Probenabtastung verwendet. Rastersondenmikroskope sind in unterschiedlichen Ausführungsformen bekannt, die nach ihrer Funktionsweise unterschiedlich bezeichnet werden. Rasterkraftmikroskope, welche eine Atomkraft einsetzen, die zwischen der Sonde und der Probe wirken, werden Atomic Force Microscope (AFM) genannt, während Mikroskope, welche eine Magnetkraft einsetzen, die zwischen Sonde und Probe angewandt wird, als Magnetic Force Microscope (MFM) bezeichnet werden. Es gibt auch elektrostatische Rastermikroskope (EFM), welche eine elektrostatische Kraft nutzen, die zwischen der Sonde und der Probe angelegt wird. Außerdem sind noch optische Rasternahfeldmikroskope (SNOM) bekannt, welche eine optische Eigenschaft des Probenobjekts verwenden.

Die aus dem Stand der Technik bekannten Verfahren der Rasterkraftmikroskopie sind im wesentlichen in Kontaktverfahren (contact mode) und kontaktlose Verfahren (non-contact mode) zu unterteilen. Beim Kontaktverfahren ist die Abtastspitze in direktem Kontakt mit der Oberfläche der Probe und wird bei konstanter Aufliegekraft über diese bewegt. Beim kontaktlosen Verfahren wird der Biegebalken in Schwingungen versetzt und die Amplitude oder die Phase dieser Schwingung gemessen oder geregelt. Dabei findet eine kontaktlose Interaktion der Abtastspitze mit der zu untersuchenden Oberfläche statt.

Auch in der Rastersondenmikroskopie wird versucht, an Stelle von Sonden mit einem einzigen Federbalken Federbalken-Arrays einzusetzen, um die abgetastete Fläche zu vergrößern, um auf diese Art und Weise die geringe Geschwindigkeit der Analyse auszugleichen. Da die Sonde Punkt für Punkt über die Oberfläche gerastert wird und die Geschwindigkeit der Abtastung begrenzt ist, dauert die Messung einer Fläche von wenigen hundert Quadratmikrometern einige Minuten. Durch Parallelisierung der Abtastung mit Hilfe von Federbalken-Arrays kann in gleicher Zeit ein Vielfaches der Fläche abgetastet werden. Ein wesentliches generelles Problem aller Federbalken-Arrays ist das mechanische Übersprechen zwischen benachbarten Federbalken, das zu einer erheblichen Verfälschung der Messung bzw. bei der Rasterkraftmikroskopie zu schwerwiegenden Fehlfunktionen des Systems führen kann. Durch den in der Regel geringen Abstand der Federbalken sind Nachbarfederbalken über die Befestigung an einem gemeinsamen Halteelement miteinander gekoppelt. Wenn ein einzelner Balken zu Schwingungen in angeregt wird, können die Schwingungen über das Halteelement zu den Nachbarfederbalken übertragen werden, die dann ebenfalls zu schwingen anfangen. Bei Anregung in Resonanz und identischer Resonanzfrequenz der Nachbarbalken kann die Amplitude des nur indirekt über die mechanische Kopplung angeregten Nachbarbalkens mehr als 10 Prozent der Amplitude des direkt angeregten Balkens erreichen. Da üblicherweise einkristallines Silizium als Halteelement eingesetzt wird, ist die mechanische Übertragung der Bewegung kaum gedämpft.

Ein Lösungsansatz zur Unterdrückung der mechanischen Kopplung zwischen benachbarten Federbalken ist die Realisierung von Schlitzen im Halteelement zwischen den Befestigungspunkten der Federbalken, mit denen der Weg, den die Schwingungsübertragung zurücklegen muss, deutlich vergrößert wird. Für eine ausreichende Entkopplung der Federbalken müssen die Schlitze aber sehr weit in das Halteelement hineinreichen. Die Realisierung solcher Schlitze ist sehr aufwändig und erfordert einen gewissen Mindestabstand zwischen den Federbalken, der aber für bestimmte Anwendungen unerwünscht ist.

Eine andere Möglichkeit, die Federbalken eines Arrays bezüglich Übersprechen zu entkoppeln besteht in der Variation der Federbalkenlänge. Durch die unterschiedliche Länge variiert die Resonanzfrequenz der Federbalken, sodass ein mechanisches Übersprechen durch das Resonanzverhalten erheblich unterdrückt ist. Ein Nachteil der Längenvariation ist aber, dass die Federkonstante der Balken ebenfalls variiert und die Position der freien Enden der Federbalken nicht den gleichen Abstand zum Halteelement haben. Insbesondere bei Rasterkraftmikroskopie-Anwendungen sind die resultierenden Unterschiede in der Tastspitzenposition am freien Ende der Balken nicht akzeptabel.

Zu der zuletzt angegebenen Möglichkeit zur Reduzierung der mechanischen Kopplung zwischen benachbarten Federbalken wird beispielhaft auf die Offenlegungsschrift DE 10 2007 045 860 A1 verwiesen. Die Druckschrift offenbart eine SPM-Sonde mit einem Federbalken-Array von vier oder einem Vielfachen davon, sich in ihrer Länge und/oder ihrer Masse geringfügig unterscheidenden Federbalken, die mit Piezoresistoren versehen sind. Die Piezoresistoren sind nach Art einer Wheatstone'schen Brücke verschaltet. Die Reaktion jedes Federbalkens wird mittels der Detektion seiner Resonanzfrequenz identifiziert. Mit der Schrift wird eine Schaltungsanordnung für parallele Federbalken-Arrays bereitgestellt, mit der die Anzahl der elektrischen Verbindungen reduziert werden kann, ohne dass es zu einer Einschränkung der Funktionalität der SPM-Sonde kommt.

Zum Stand der Technik wird weiterhin auf die Patentschrift US 6,469,291 B1 und den Fachartikel "Multifunctional probe array for nano patterning and imaging" in der Fachzeitschrift NANO LETTERS, Vol. 5, No. 10, 24. September 2005, Seiten 1867-1872 verwiesen. Die Druckschriften offenbaren Multiprobe-Mikrosonden, mit einem Halteelement und einer Anzahl von Federbalken, die nebeneinander mit Abstand angeordnet seitlich von einem Rand des Halteeelements abstehen. Die jeweiligen Federbalken weisen eine identische Länge auf, wobei jeder der Federbalken zumindest gegenüber den beiden direkt benachbarten Federbalken eine unterschiedliche Querschnittsform zumindest über einen Teil der Länge aufweist. Bei der in der Patentschrift behandelten Mikrosonde weisen die Federbalken die unterschiedliche Querschnittsform zueinander an den dem Halteelement zugeordneten Enden auf, bei der im Fachartikel beschriebenen Mikrosonde über die gesamte Länge der Federbalken.

Ausgehend von dem vorstehend genannten Stand der Technik liegt der Erfindung die Aufgabe zugrunde, eine andere Möglichkeit zur Verminderung oder Verhinderung des mechanischen Übersprechens zwischen benachbarten Federbalken einer Mikrosonde vorzuschlagen, ohne wesentliche Parameter der Mikrosonde, wie beispielsweise die Federbalkenlänge oder die Federkonstante zu verändern.

Diese Aufgabe wird erfindungsgemäß durch eine Mikrosonde mit den Merkmalen des Anspruchs 1 gelöst. Weitere vorteilhafte Ausführungsformen sind den rückbezogenen Ansprüchen zu entnehmen.

Bei der vorgeschlagenen Mikrosonde, mit einem Halteelement und einer Anzahl von Federbalken, die nebeneinander mit Abstand angeordnet seitlich von einem Rand des Halteelements abstehen, weisen die Federbalken eine identische Länge auf, wobei jeder der Federbalken zumindest gegenüber den beiden direkt benachbarten Federbalken eine unterschiedliche Querschnittsform, zumindest über einen Teil seiner Länge aufweist. Erfindungsgemäß weisen die Federbalken der vorgeschlagenen. Mikrosonde die unterschiedliche Querschnittsform zueinander an den freien Enden auf. Typischerweise erstreckt sich die unterschiedliche Querschnittsform benachbarter Federbalken maximal über ein Drittel der Länge der Federbalken, wobei die unterschiedliche Querschnittsform der Federbalken von einer Querschnittsänderung des Federbalkens bestimmt ist, die sprunghaft erfolgt.

Es hat sich als besonders günstig erwiesen, wenn mehrere nebeneinander aufeinanderfolgend angeordnete Federbalken der erfindungsgemäßen Mikrosonde einander gegenüber eine derart unterschiedliche Querschnittsform aufweisen, dass sich die Resonanzfrequenzen der Federbalken zumindest geringfügig unterscheiden. Durch gezielte Variation der Federbalkenform am freien Ende der Federbalken kann ohne Änderung der Gesamtlänge die Resonanzfrequenz der Federbalken so eingestellt werden, dass Nachbarbalken eine deutlich unterschiedliche Resonanzfrequenz haben. Die Variation der Federbalkenform kann insbesondere allein durch lokale Vergrößerung oder Verringerung der Federbalkenbreite erfolgen. Eine solche Modifikation ist leicht durch eine entsprechende Anpassung des Layouts in der Photolithographie-Maske realisierbar.

Die Erfindung löst das Problem der mechanischen Kopplung resonant betriebener mikromechanischer Federbalken-Arrays ohne komplexe Modifikation des Halteelements, ohne Variation der Federbalkenlänge und mit nahezu identischen Federkonstanten der Balken. Dabei kann die unterschiedliche Querschnittsform prinzipiell an jeder beliebigen Stelle der benachbarten Federbalken ausgebildet sein. Partielle unterschiedliche Querschnittsformen der Federbalken können auf einfache Weise durch Variation von Breite oder Höhe der von dem Halteelement mit gleicher Breite ausgehenden Federbalken realisiert werden. Die jeweiligen Querschnittsänderungen benachbarter Federbalken können an einander gegenüberliegend oder an versetzt zueinander angeordneten Stellen der Federbalken verwirklicht werden. Auch eine von der Grundform des Federbalkens deutlich abweichende Geometrie über einen Teil der Länge der Federbalken ist nicht ausgeschlossen. Zudem schließt die Erfindung ein, dass sich die Querschnittsform des Federbalkens über den entsprechenden Teil der Länge des jeweiligen Federbalkens in Längs- und/oder Querrichtung des Federbalkens jeweils mehrfach kontinuierlich oder sprunghaft ändert.

Typischerweise weisen die Federbalken der Mikrosonde zudem einen Aktuator zur Auslenkungsanregung des Federbalkens auf, wobei der Aktuator ein integriertes Heizelement zur partiell unterschiedlichen thermischen Ausdehnung aufweist, das eine Krümmung des Aktuators bewirkt, die auf den Federbalken übertragen wird. Für eine individuelle Anregung der Federbalken kann in jeden Federbalken ein solcher Aktuator integriert werden. Ein Ausführungsbeispiel für diesen Aktuator kann ein Mehrschichtbiegewandler mit integriertem Heizelement sein. Die über das Heizelement eingebrachte Erwärmung des Mehrschichtsystems führt über eine unterschiedliche thermische Ausdehnung zu einer Biegung des Federbalkens. Im Fall von mikromechanischen Federbalken aus gut Wärme leitenden Materialien wie Silizium und Aluminium kann eine Modulation der Temperatur der Federbalken im kHz-Bereich und damit eine Anregung von entsprechend hochfrequenten Schwingungen des Federbalkens erreicht werden. Alternativ sind aber auch piezoelektrische oder kapazitive Aktuatoren einsetzbar.

Indem sich die Modifikation der Federbalkengeometrie auf das letzte Drittel des Federbalkens an seinem freien Ende beschränkt, ist die Änderung der Federkonstante durch die Formvariation nur sehr gering. Trotz deutlich unterschiedlicher Resonanzfrequenz besitzen die Federbalken eine nahezu identische Anregungseffizienz und Empfindlichkeit. Das mechanische Überkoppeln zwischen Nachbarbalken wird durch die unterschiedliche Resonanzfrequenz effektiv unterdrückt, auch wenn der Abstand zwischen den Federbalken des Arrays kleiner ist als die Federbalkenlänge.

Vorzugsweise ist dabei die unterschiedliche Querschnittsform der Federbalken von einer Breitenänderung des Federbalkens bestimmt

Die erfindungsgemäße Mikrosonde dient zur Umsetzung von biologischen, chemischen oder physikalischen Einwirkungen auf den Federbalken in einemechanische Reaktion, die mit geeigneten dem Fachmann vertrauten Maßnahmen detektierbar ist. Die vorstehenden Einwirkungen lenken in der Regel die Federbalken in die eine oder andere Richtung aus und regen diese somit zu Schwingungen an oder beeinflussen die Schwingungen der bewusst in bestimmte Schwingungen versetzten Federbalken.

Bei einigen Ausführungsformen der erfindungsgemäßen Mikrosonde sind die Federbalken vorzugsweise parallel zueinander angeordnet, wobei der Abstand zwischen den Federbalken kleiner ist als die Länge der Federbalken. Dabei beträgt die Länge der Federbalken typisch weniger als 500 Mikrometer.

Bei Federbalken-Arrays für parallele Rastersondenmikroskopie lassen sich Abtastspitzen integrieren, die sich für alle Federbalken exakt im gleichen Abstand zum jeweiligen Befestigungspunkt des Federbalkens befinden. Die Abtastspitze der Federbalken weisen damit eine identische Distanz zu dem Rand des Halteelementes auf.

Für eine individuelle Detektion der Auslenkung der Federbalken können entsprechende Auslenkungssensoren auf die Federbalken aufgebracht oder in die Federbalken integriert werden. Ein Ausführungsbeispiel für solche Auslenkungssensoren sind piezoresistive Dehnungssensoren, die in der Nähe des Befestigungspunktes im Bereich der größten Oberflächendehnung in den Federbalken integriert werden. Bei Auslenkung des Federbalkens werden die Piezowiderstände des Sensors gedehnt und ändern dadurch ihren Widerstand Diese Änderung kann über die Änderung der Spannung an den Widerständen bei konstantem Strom gemessen werden. Besonders empfindlich ist der piezoresistive Dehnungssensor, wenn er in Form einer Messbrücke ausgeführt wird. Alternativ sind aber auch piezoelektrische oder kapazitive Auslenkungssensoren möglich.

Vorzugsweise weisen alle vorstehend beschriebenen Ausführungsformen ein Halteelement aus einkristallinem Silizium auf, an dem die Federbalken in Form von Arrays angeordnet sind. Bei größeren Federbalken-Arrays reicht es in der Regel aus, die Form einiger weniger Nachbarbalken zu variieren. Da das Übersprechen mit zunehmendem Abstand abnimmt, kann nach einigen Federbalken wieder die gleiche Form verwendet werden. Das gesamte Array setzt sich in diesem Fall aus identischen Gruppen von Federbalken zusammen. Innerhalb der Gruppe haben die Federbalken jeweils unterschiedliche Form.

Nachfolgend wird die Erfindung anhand von in der Zeichnung dargestellten Ausführungsbeispielen näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale der Erfindung können für sich allein oder zu mehreren bei unterschiedlichen Ausführungsformen der Erfindung verwirklicht sein. Es zeigen in schematischer perspektivischer Darstellung:
- Figur 1: eine erste erfindungsgemäße Mikrosonde mit vier Federbalken ohne Abtastspitze;
- Figur 2: eine zweite erfindungsgemäße Mikrosonde als SPM-Sonde mit vier Federbalken mit Abtastspitze;
- Figur 3: die SPM-Sonde gemäß Figur 2 mit integrierten Auslenkungs- sensoren und integrierten Aktuatoren; und
- Figur 4: eine vierte erfindungsgemäße Mikrosonde ähnlich Figur 1 mit zwanzig Federbalken ohne Abtastspitze.

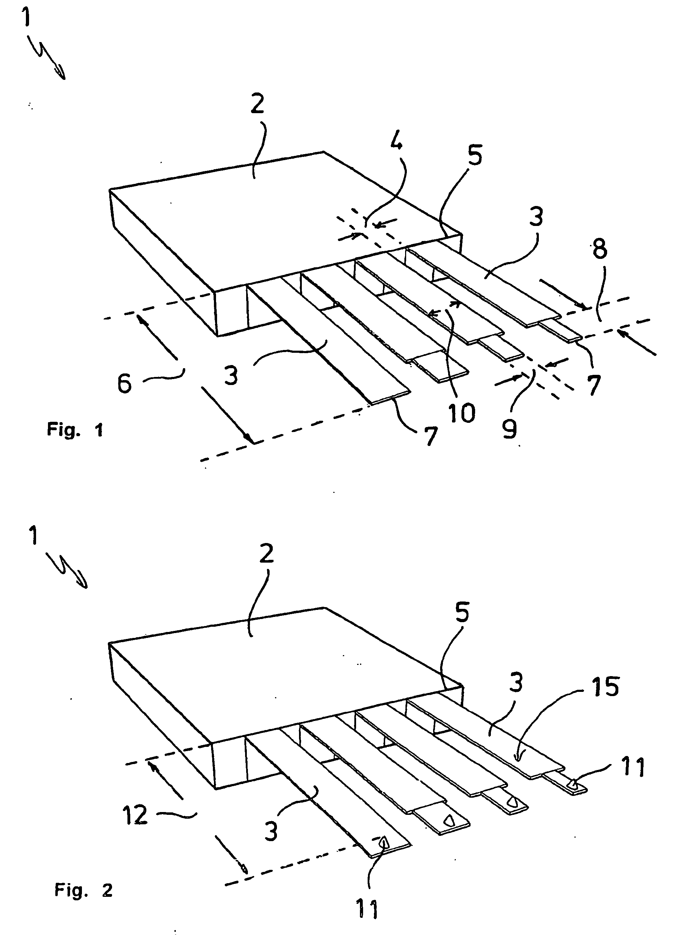

Figur 1 zeigt ein erstes Ausführungsbeispiel der erfindungsgemäßen Mikrosonde 1 ohne Abtastspitze, für die Anwendung bei der kontaktlosen Rasterkraftmikroskopie. Die Mikrosonde 1 weist ein Halteelement 2 und vier Federbalken 3 auf, die parallel nebeneinander mit identischem seitlichem Abstand 4 zueinander angeordnet sind und seitlich von einem Rand 5 des Halteelements 2 abstehen. Die Federbalken 3 weisen eine einheitliche Länge 6 von einem freien Ende 7 des Federbalkens 3 gemessen zu dem Rand 5 des Halteelements 2 auf. Jeder der Federbalken 3 weist gegenüber den benachbarten Federbalken 3 eine unterschiedliche Querschnittsform über einen Teil 8 der Länge 6 der Federbalken 3 auf. Die unterschiedliche Querschnittsform ist an den freien Enden 7 der Federbalken 3 realisiert.

Die Länge 6 der Federbalken 3 ist für alle vier Federbalken 3 identisch und ist in diesem Ausführungsbeispiel deutlich größer als der Abstand 4 zwischen den Federbalken 3. Außerdem ist der Teil 8 der Länge 6, an dem die Federbalken 3 eine unterschiedliche Querschnittsform zeigen, deutlich kleiner als ein Drittel der gesamten Länge 6 der Federbalken 3. Drei der vier vorgesehenen Federbalken 3 unterscheiden sich jeweils von dem vierten Biegebalken 3, der über seine Länge 6 eine gleichbleibende Breite 10 aufweist, indem in dem Teil 8 der Länge 6 eine Breite 9 gegenüber einer Breite 10 der Federbalken 3 im Bereich des Randes 5 des Halteelementes 2 lokal verringert ist. Die drei sich am Teil 8 der Länge 6 verjüngenden Federbalken 3 weisen einander gegenüber eine unterschiedliche Breite 9 auf.

Figur 2 zeigt ein zweites Ausführungsbeispiel der erfindungsgemäßen Mikrosonde 1 in Form einer SPM-Sonde 1 mit Abtastspitze 11, die sowohl für die Anwendung bei der kontaktlosen wie auch bei der kontaktierenden Rasterkraftmikroskopie verwendbar ist. Die SPM-Sonde 1 gemäß Figur 2 unterscheidet sich von der in der Figur 1 gezeigten SPM-Sonde 1 lediglich durch die Abtastspitze 11. Die Abtastspitzen 11 sind jeweils an dem freien Ende 7 der Federbalken 3 angeordnet und weisen eine identische Distanz 12 zu dem Rand 5 des Halteelements 2 auf, das vorzugsweise aus einkristallinem Silizium besteht.

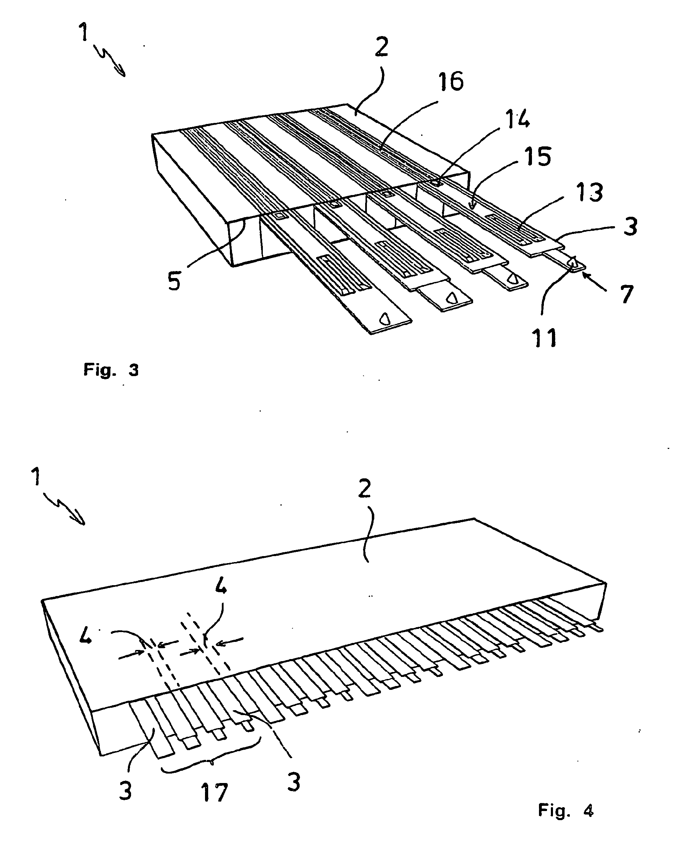

Figur 3 zeigt die in der Figur 2 abgebildete SPM-Sonde 1 mit integrierten Auslenkungssensoren 13 und integrierten Aktuatoren 14, ansonsten unverändert. Die Auslenkungssensoren 13 und die Aktuatoren 14 sind auf einer der Probe zuordenbaren Unterseite 15 der Federbalken 3 der SPM-Sonde 1 angeordnet, wobei elektrische Anschlussleitungen 16 zu dem Halteelement 2 führen. Die Aktuatoren 14, beispielsweise Mehrschichtbiegewandler mit integrierten Heizelementen, sind jeweils an dem Federbalken 3 nahe dem Rand 5 des Halteelementes 2 aufgereiht. Die Auslenksensoren 13, beispielsweise piezoresistive Dehnungsmessstreifen, sind entfernt von den Aktuatoren 14 in etwa mittig zwischen dem Rand 5 des Halteelementes 2 und dem freien Ende 7 des Federbalkens 3 an dem Federbalken 3 ebenfalls in einer Reihe angeordnet.

Die Figur 4 zeigt eine Variante der in der Figur 1 dargestellten Mikrosonde 1. Die dargestellte Mikrosonde 1 weist eine größere Anzahl von Federbalken 3 auf, als die in der Figur 1 veranschaulichte Mikrosonde 1. Anstelle von vier Federbalken 3 sind zwanzig Federbalken 3 vorgesehen, wobei sich die in der Figur 1 verbildlichte Anordnung 5-fach als Gruppe 17 wiederholt. Die fünf Gruppen (Arrays) 17 von jeweils vier Federbalken 3 weisen zueinander den gleichen Abstand 4 wie die Federbalken 3 innerhalb einer Gruppe 17 auf. Jeweils vier aufeinander folgende Federbalken 3 haben an dem freien Ende 7 des Federbalkens 3 eine unterschiedliche Form.

## Patentansprüche

1. Mikrosonde (1), mit einem Haltelement (2) und einer Anzahl von Federbalken (3), die nebeneinander mit Abstand (4) angeordnet seitlich von einem Rand (5) des Halteelements (2) abstehen, wobei die Federbalken (3) eine identische Länge (6) aufweisen und jeder der Federbalken (3) zumindest gegenüber den beiden direkt benachbarten Federbalken (3) eine unterschiedliche Querschnittsform zumindest über einen Teil (8) der Länge (6) aufweist, **dadurch gekennzeichnet, dass** die Federbalken (3) die unterschiedliche Querschnittsform zueinander an ihren freien Enden (7) aufweisen und dass die unterschiedliche Querschnittsform der Federbalken (3) von einer Querschnittsänderung (10, 9) des Federbalkens (3) bestimmt ist, die sprunghaft erfolgt, wobei sich die unterschiedliche Querschnittsform maximal über ein Drittel der Länge (6) der Federbalken (3) erstreckt, und wobei die Federbalken (3) einen Aktuator (14) zur Auslenkungsanregung aufweisen.

2. Mikrosonde nach Anspruch 1, **dadurch gekennzeichnet, dass** die unterschiedliche Querschnittsform der Federbalken (3) von einer Breitenänderung (10, 9) des Federbalkens (3) bestimmt ist.

3. Mikrosonde nach Anspruch 1 oder 2, **dadurch gekennzeichnet, dass** die Federbalken (3) parallel zueinander angeordnet sind, wobei ein Abstand (4) zwischen den Federbalken (3) kleiner ist als die Länge (6) der Federbalken (3).

4. Mikrosonde nach einem der vorstehenden Ansprüche, **dadurch gekennzeichnet, dass** die Länge (6) der Federbalken (3) kleiner als 500 Mikrometer ist.

5. Mikrosonde nach einem der vorstehenden Ansprüche, **dadurch gekennzeichnet, dass** die Federbalken (3) an dem freien Ende (7) jeweils eine Abtastspitze (11) tragen.

6. Mikrosonde nach Anspruch 5, **dadurch gekennzeichnet, dass** die Abtastspitzen (11) der Federbalken (3) eine identische Distanz (12) zu dem Rand (5) des Halteelements (2) aufweisen.

7. Mikrosonde nach einem der vorstehenden Ansprüche, **dadurch gekennzeichnet, dass** zumindest das Halteelement (2) aus einkristallinem Silizium besteht.

8. Mikrosonde nach einem der vorstehenden Ansprüche, **dadurch gekennzeichnet, dass** der Aktuator (14) ein integriertes Heizelement aufweist.

9. Mikrosonde nach einem der vorstehenden Ansprüche, **dadurch gekennzeichnet, dass** die Federbalken (3) einen Auslenkungssensor (13) zur Auslenkungsdetektion aufweisen.

10. Mikrosonde nach Anspruch 9, **dadurch gekennzeichnet, dass** der Auslenkungssensor (13) ein piezoresistiver Dehnungssensor ist.

## Claims

1. Microprobe (1), with a support element (2) and a number of cantilevers (3) protruding laterally from an edge (5) of the support element (2) disposed adjacent to each other with distance, wherein the cantilevers (3) are of identical length (6) and each of the cantilevers (3) has at least with respect to the two directly neighbored cantilevers (3) a different cross-section shape at least along a section (8) of the length (6), **characterized in that** the cantilevers (3) have the different cross-section shape to each other at its free ends (7) and that the different cross-section shape of the cantilevers (3) is defined by a change in cross-section (10, 9) of the cantilever (3) that occurs abruptly, wherein the different cross-section shape maximally extends over a third of the length (6) of the cantilevers (3), and wherein the cantilevers (3) are showing an actuator (14) for deflection-stimulation.

2. Microprobe as claimed in claim 1, **characterized in that** the different cross-section shape of the cantilevers (3) is defined by a change in width (10, 9) of the cantilever (3).

3. Microprobe as claimed in claim 1 or 2, **characterized in that** the cantilevers (3) are arranged parallel to one another, wherein a gap (4) between the cantilevers (3) is smaller than the length (6) of the cantilevers (3).

4. Microprobe as claimed in one of the previous claims, **characterized in that** the length (6) of the cantilevers (3) is smaller than 500 micrometers.

5. Microprobe as claimed in one of the previous claims, **characterized in that** the cantilevers (3) are carrying at its free end (7) in each case a scanning tip (11).

6. Microprobe as claimed in claim 5, **characterized in that** the scanning tips (11) of the cantilevers (3) have a same distance (12) towards the edge (5) of the support element (2).

7. Microprobe as claimed in one of the previous claims, **characterized in that** the at least the support element (3) consists of mono-crystalline silicon.

8. Microprobe as claimed in one of the previous claims, **characterized in that** the actuator (14) comprises an integrated heating element.

9. Microprobe as claimed in one of the previous claims, **characterized in that** the cantilevers (3) have a deflection sensor (13) for deflection-detection.

10. Microprobe as claimed in claim 9, **characterized in that** the deflection sensor (13) is a piezoresistive strain sensor.

## Revendications

1. Microsonde (1), avec un élément de maintien (2) et une pluralité de poutres élastiques (3) qui sont disposées les unes à côté des autres à une distance (4) et latéralement en saillie d'un bord (5) de l'élément de maintien (2), les poutres élastiques (3) présentant une longueur identique (6) et chacune des poutres élastiques (3) présentant une forme de section différente, au moins sur une partie (8) de la longueur (6), au moins par rapport aux poutres élastiques (3) directement adjacentes, **caractérisée en ce que** les poutres élastiques (3) présentent la forme de section différente les unes des autres à leurs extrémités libres (7) et que la forme de section différente des poutres élastiques (3) est déterminée par un changement de section (10, 9) de la poutre élastique (3) qui a lieu de manière brusque, la forme de section différente s'étendant au maximum sur un tiers de la longueur (6) des poutres élastiques (3), et les poutres élastiques (3) présentant un actionneur (14) pour impulser la déviation.

2. Microsonde selon la revendication 1, **caractérisée en ce que** la forme de section différente des poutres élastiques (3) est déterminée par un changement de largeur (10, 9) de la poutre élastique (3).

3. Microsonde selon la revendication 1 ou 2, **caractérisée en ce que** les poutres élastiques (3) sont disposées parallèlement les unes aux autres, une distance (4) entre les poutres élastiques (3) étant plus petite que la longueur (6) des poutres élastiques (3).

4. Microsonde selon une des revendications précédentes, **caractérisée en ce que** la longueur (6) des poutres élastiques (3) est inférieure à 500 micromètres.

5. Microsonde selon une des revendications précédentes, **caractérisée en ce que** les poutres élastiques (3) portent chacune une pointe d'exploration (11) à leur extrémité libre (7).

6. Microsonde selon la revendication 5, **caractérisée en ce que** les pointes d'exploration (11) des poutres élastiques (3) présentent une distance identique (12) par rapport au bord (5) de l'élément de maintien (2).

7. Microsonde selon une des revendications précédentes, **caractérisée en ce qu'**au moins l'élément de maintien (2) est composé de silicium monocristallin.

8. Microsonde selon une des revendications précédentes, **caractérisée en ce que** l'actionneur (14) présente un élément chauffant intégré.

9. Microsonde selon une des revendications précédentes, **caractérisée en ce que** les poutres élastiques (3) présentent un capteur de déviation (13) pour détecter la déviation.

10. Microsonde selon la revendication 9, **caractérisée en ce que** le capteur de déviation (13) est un capteur d'allongement piézorésistif.
